# EUROPEAN PATENT SPECIFICATION

(11) **EP 0 975 910 B1**
(45) Date of publication and mention of the grant of the patent: **10.08.2005**
(21) Application number: 98918092.2
(22) Date of filing: 14.04.1998
(51) Int. Cl.: F16L 19/10

(54) **FERRULE WITH RELIEF TO REDUCE GALLING**
HÜLSE MIT AUSNEHMUNG ZUM MINIMIEREN VON ABRIEBVERSCHLEISS
FERRULE A EXPANSION PERMETTANT DE REDUIRE LE GRIPPAGE

(30) Priority: 15.04.1997 US 834255; 02.04.1998 US 54186
(43) Date of publication of application: 02.02.2000
(60) Divisional application: 03019045.8
(73) Proprietor: Swagelok Company, Solon, OH 44139 (US)
(72) Inventor: WILLIAMS, Peter, C., Cleveland Heights, OH 44121 (US); KUHNS, Howard, C., B., Aurora, OH 44202 (US); MCMILLAN, David, A., Streetsboro, OH 44241 (US)
(74) Representative: Neill, Alastair William
(86) International application number: PCT/US1998/007202
(87) International publication number: WO 1998/046925

(56) References cited:
- FR-A- 757 204
- US-A- 2 701 149
- US-A- 3 103 373
- US-A- 3 250 550
- US-A- 3 888 522

## Description

### Background of the Invention

The subject invention is directed to the art of ferrule type tube fittings. More particularly, the invention concerns a two ferrule fitting wherein the rear ferrule is designed to reduce the torque required to rotate the associated nut and to also reduce galling between the rear ferrule and the interior surface of the drive nut.

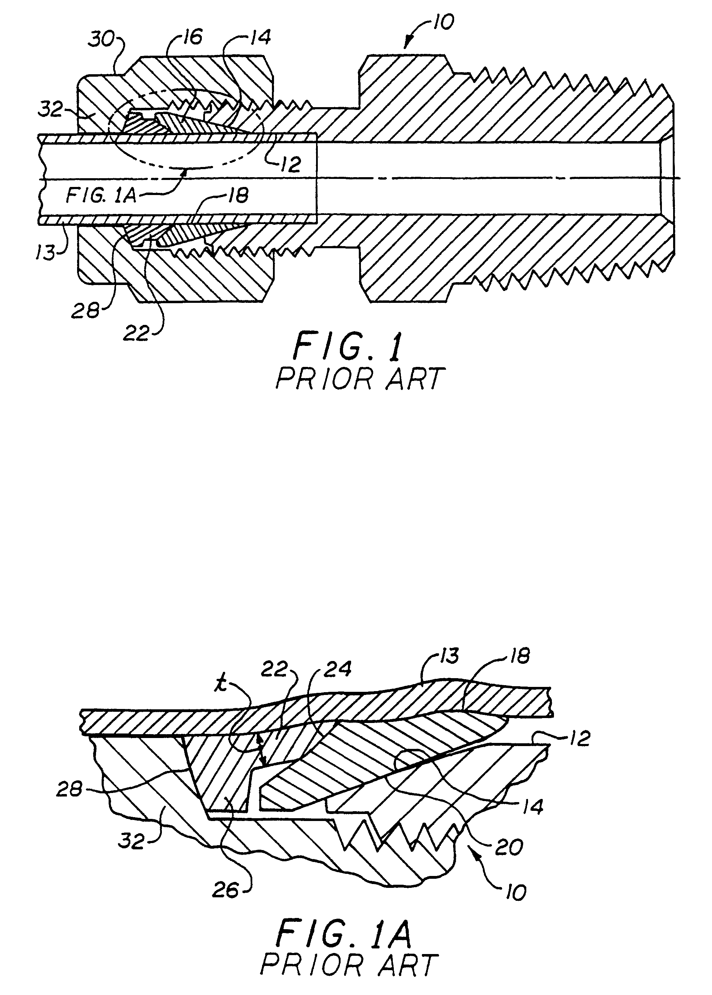

A commercially available and highly successful two ferrule fitting used for tubing is illustrated in FIGS. 1 and 1A. FIG. 1 shows the fitting components in a finger tight position preparatory to final tightening, whereas FIG. 1A shows the fitting after final tightening. As shown, the fitting comprises a body **10** having a cylindrical opening **12** counterbored for receiving tube end **13.** A tapered, frusto-conical camming mouth **14** is located at the axial outer end of the counterbore. A front ferrule **16** having a smooth, cylindrical inner wall **18** is closely received on the tube. The front ferrule has a frusto-conical outer surface **20** to be received in the camming mouth.

Associated with the front ferrule **16** and located axially outward therefrom is a rear ferrule **22** configured as shown with a tapered nose portion **24** and a rear flange **26** having an inclined end surface **28.** The tapered nose enters a tapered camming surface in the rear surface of the front ferrule.

The ferrules **16, 22** are enclosed by a drive nut member **30** threaded to the body. During tightening and make-up of the fitting, the inner end face, flange, or shoulder **32** of the nut acts against the rear wall of the rear ferrule to drive the ferrules forwardly into the fully engaged position shown in FIG. 1A.

The small diameter portion or nose of the rear ferrule is dimensioned so that it plastically deforms during make-up of the fitting. This action is desirable since it results in tight gripping engagement of the outer wall of the tubing. The thickness of the nose portion cannot be reduced to an extent that the rear ferrule deforms too much and only the rear ferrule adequately grips the outer wall of the tubing. That is, the two ferrule assembly requires desired deformation of both the front and rear ferrules for the gripping and sealing capabilities that have made this two ferrule assembly a commercially successful product. On the other hand, the thickness of the nose of the rear ferrule cannot be enlarged to such an extent that it results in a structural arrangement that is too stiff and does not permit the desired rear ferrule deformation.

Accordingly, it will be recognized by those skilled in the art that a predetermined wall thickness of the nose of the rear ferrule is desired that achieves the desired gripping of the tube and cooperates with the front ferrule in such a manner that it achieves its desired goals of gripping and sealing the tube.

It is also recognized that operators of fluid systems test the system prior to a production run by pressurizing the system to an appropriate factor times the rated system pressure. In this manner, the operator can easily detect whether the fluid system is sealed, i.e. that there are no leaks. With this knowledge, the manufacturer can provide a fitting in which the nose of the rear ferrule will not have any additional plastic deformation at the elevated test pressure. Accordingly, the elevated test pressure is used to determine the desired wall thickness of the nose portion of the rear ferrule to achieve the desired amount of deformation of the nose and permit the front and rear ferrules to properly grip and seal with the outer wall of the tube.

It has also been found that galling of the drive nut sometimes occurs in the drive face area of engagement between the inner end face of the drive nut and the rear wall of the rear ferrule. After analysis, it is believed that the axial thrust or pull-up force between the front and rear ferrule is essentially parallel to the axis of the fitting. This axial thrust causes the rear corner region of the rear ferrule to selectively concentrate pull-up force at the inside drive surface of the nut particularly in a localized area to produce the galling. This also noticeably increases the nut torque forces experienced during make-up even if galling is absent. Accordingly, it would be highly desirable to provide a design wherein the thrust forces do not produce the high localized loading with the resultant galling and high torque forces.

US 2701149 discloses a high-pressure pipe coupling having a tubular terminal coupling member forming a radially extending annular seat for receiving in abutment therewith the radially extending annular end of a substantially radially non-deformable pipe to be coupled therewith. The coupling also includes a device for securing said pipe in fluid- and pressure-tight assembly with said terminal coupling member. This device comprises a first tubular sealing element which has an annular sealing and cutting edge, an annular axially movable first pressure member, a second tubular sealing element having a portion forming an annular sealing and cutting edge, and a second annually axially removable pressure member. However, this coupling is reliant on sealing elements cutting into the pipe to effect a seal therewith.

### Summary of the Invention

In accordance with the present invention, there is provided a tube fitting of the type including a fitting body having a cylindrical bore closely receiving a tube end, a tapered counterbore surrounding the tube end and defining the entrance to the bore, a threaded drive member threaded to the fitting body and cooperating with the fitting body to define a chamber enclosing the tube end, and a ferrule having a rear wall engaged by an axial inner end wall of the nut member and a tapered nose with a forward end extending into said tapered counterbore, characterised in that the ferrule has a substantially continuous cylindrical interior wall that closely surrounds the tube end with the cylindrical interior wall having a circumferentially continuous radial recess located between the ferrule's forward end and rear wall and axially spaced from said ferrule forward end to cause reaction forces generated during fitting make-up and passing through the ferrule to the threaded drive member to have a significant force component that is directed radially outward to thereby reduce a force component acting axially against the radial inner portion of the inner end wall of the nut member; the tube fitting being such that the ferrule comprises a rear ferrule, the tube fitting including a front ferrule surrounding the tube end with a tapered nose extending into the tapered counterbore and a rear wall located axially outward, the tapered nose of the rear ferrule extending into a tapered recess formed in the rear wall of the front ferrule, such that said reaction forces pass from the front ferrule through the rear ferrule to the threaded drive member.

These and other aspects and advantages of the present invention will be apparent to those skilled in the art from the following description of the preferred embodiments in view of the accompanying drawings.

### Brief Description of the Drawings

The invention may take physical form in certain parts and arrangements of parts, preferred embodiments and a method of which will be described in detail in this specification and illustrated in the accompanying drawings which form a part hereof, and wherein:
FIG. 1 is a longitudinal cross-sectional view of a well known prior art two ferrule swage-type fitting;
FIG. 1A is an enlarged view of the circled area of FIG. 1 showing the prior art fitting in a made-up condition;
FIG. 2 is a view like FIG. 1 but showing a preferred embodiment of a fitting incorporating a modified rear ferrule designed to improve reaction force transmission through the rear ferrule;
FIG. 3 is a greatly enlarged showing of the circled area of FIG. 2;
FIG. 4 is a detailed, partial cross-sectional view of a preferred form of rear ferrule;
FIG. 5 is a cross-sectional view similar to FIG. 4 showing a second preferred form for the rear ferrule;
FIG. 6 is a cross-sectional view of the fitting of FIG. 1 particularly showing the rear ferrule positioned between the front ferrule and the nut at initial make-up (graphically meshed for finite element analysis);
FIG. 7 is a view of the fitting of FIG. 6 in a made-up condition and illustrating the force concentrations;
FIG. 8 is a cross-sectional view of a fitting at initial make-up including a rear ferrule modified in accordance with the teachings of the invention (graphically meshed for finite element analysis);
FIG. 9 is a view of the fitting of FIG. 8 in a made-up condition and illustrating the force concentrations;
FIG. 10 is a cross-sectional view of a fitting at initial make-up including a rear ferrule modified in accordance with the teachings of the invention (graphically meshed for finite element analysis);
FIG. 11 is a view of the fitting of FIG. 10 in a made-up condition and illustrating the force concentrations;
FIG. 12 is a cross-sectional view of a fitting at initial make-up including a rear ferrule modified in accordance with the teachings of the invention (graphically meshed for finite element analysis);
FIG. 13 is a view of the fitting of FIG. 12 in a made-up condition and illustrating the force concentrations;
FIG. 14 is a table of different geometrical variations of the rear ferrule configuration;
FIG 15 is a cross-sectional view of an alternative embodiment of a two ferrule fitting;
FIG. 16 is an enlarged view of the ferrule region of the embodiment of FIG. 15;
FIG. 17 is a partial view of a rear ferrule with a contoured face in accordance with one aspect of the invention;
FIG. 18 is a partial view of a contoured rear ferrule shown in the engaged position with a front ferrule and drive nut surfaces prior to pull up;
FIG. 19 is a view of the embodiment of FIG. 18 in the pulled up condition showing force distributions;
FIG. 20 is another embodiment of the invention;
FIG. 21 illustrates force distributions in a two ferrule fitting that does not use a contoured rear ferrule; and
FIG. 22 illustrates another embodiment of a rear ferrule design incorporating a circumferential recess.

### Detailed Description of the Preferred Embodiments

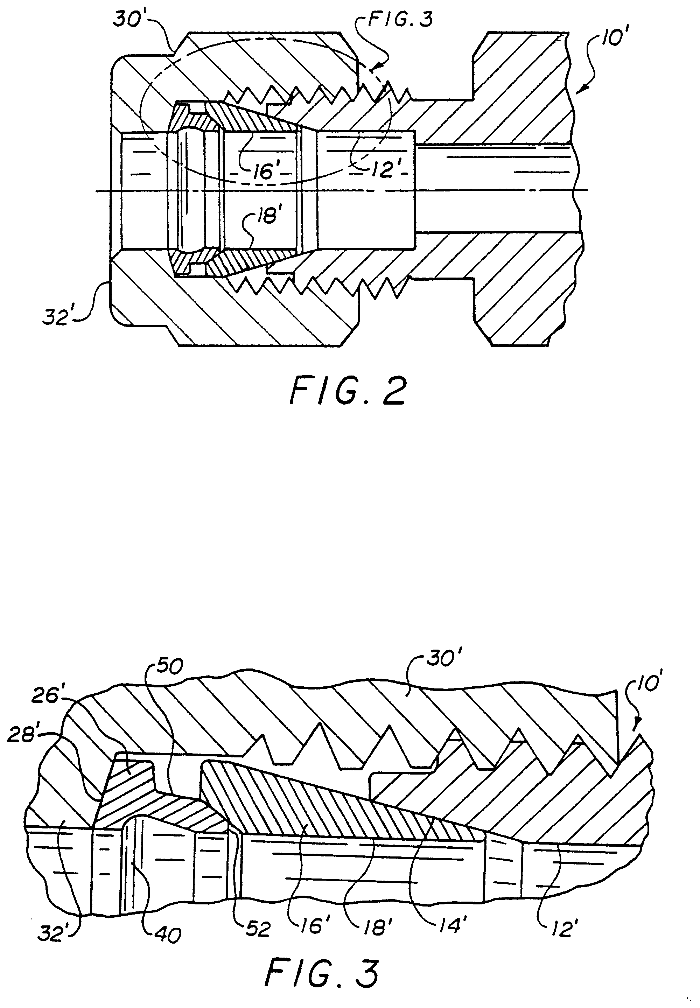

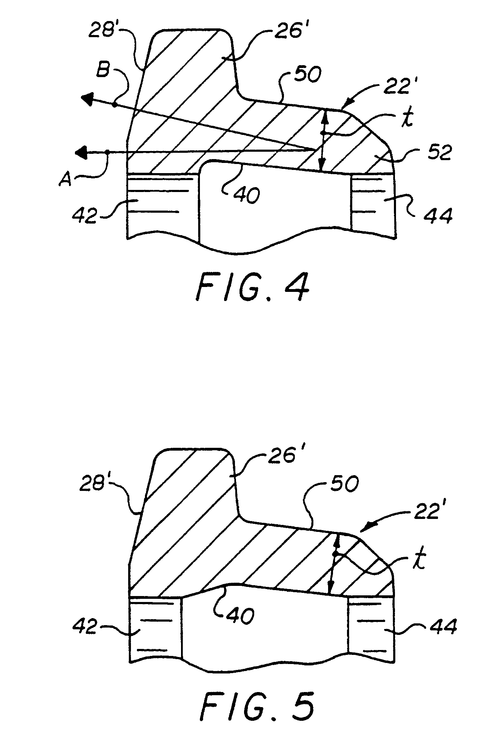

Referring now to the drawings wherein the showings are for the purposes of illustrating preferred embodiments of the invention only and not for purposes of limiting same, FIGS. 2-4 illustrate the overall arrangement of a fitting incorporating the invention. The FIGS. 2-4 embodiment has the major components identified with the same reference numerals used with respect to the description of the prior art device of FIGS. 1 and 1A. A description of a FIG. 1 element is to be taken as equally applicable to the FIGS. 2-4 elements that are correspondingly numbered unless otherwise noted. In particular, in the FIGS. 2-4 embodiment, the rear ferrule **22'** has been modified in a manner to cause the reaction forces acting between the front ferrule through the rear ferrule to the nut to have a significant force component that is directed radially outward. This is in contradistinction to the FIGS. 1 and 1A embodiment wherein the force component under consideration has a high axial component. Specifically, as shown in FIG. 4, force component **A** extends generally axially of the rear ferrule **22'** and results in an increase in the loads applied at the radial inner face of the ferrule surface **28'** and the flange **32'** of the nut. As previously discussed, high localized loading or force concentration in this area produces high torque and galling.

In the preferred form of the invention, a redirection of the reaction forces is achieved by providing a circumferential recess **40** throughout the inner surface of the ferrule **22'.** Note that a recess **40** is located generally midway between the opposite ends of the ferrule **22'** and this results in the inner surface of the rear ferrule being reduced to two relatively narrow contact areas **42** and **44.** By so modifying the rear ferrule, the forces which are conducted from the front ferrule through the rear ferrule to the nut surface or flange **32'** tend to be directed more radially outward such as diagrammatically illustrated by the force line **B** of FIG. 4.

Another important feature of the invention is best exemplified by comparing the rear ferrule of FIG. 1 with the rear ferrule of the FIGS. 2-4 embodiment. Particularly, the outer radial wall **50** of the rear ferrule includes a conical section that increases in radial dimension as it extends from the forward nose portion, that is received in the rear chamfer region **52** of the front ferrule, to the rear flange **26'.** In the prior art arrangement (FIGS. 1 and 1A), the rear ferrule has a cylindrical through bore and an outer radial wall that extends parallel to the inner surface defining the through bore in this region. In other words, the rear ferrule has a constant annular wall thickness **"t".** In the embodiment of FIGS. 2-4. the outer wall has the conical or tapered configuration that provides sufficient wall thickness **"t"** and controlled deformation of the nose portion when the recess is incorporated into the modified rear ferrule. Preferably, the outer wall **50** has a generally uniform angle or taper as it extends between the reduced dimension nose region **52** received in the camming mouth of the front ferrule and the enlarged diameter rear flange **26'.** Again, this provides controlled deformation of the rear ferrule so that the region **52** is plastically deformed radially inward along surface **44** into gripping, sealed engagement with the outer wall of the tube.

FIG. 5 illustrates another preferred embodiment of the rear ferrule in which the recess **40** has is defined by two different angles (an obtuse triangle). For example, the smaller first angle defined with the inner surface increases as it extends rearwardly from the surface **44** toward the rear flange **26'.** The larger second angle (approximately twice the angular dimension of the first angle) increases as it extends forwardly from the surface **42** toward the nose region. These angles thus intersect at an axial position that is located beneath the intersection of the outer wall **50** with the rear flange. Accordingly, the forces are more evenly distributed over the rear face **28'.**

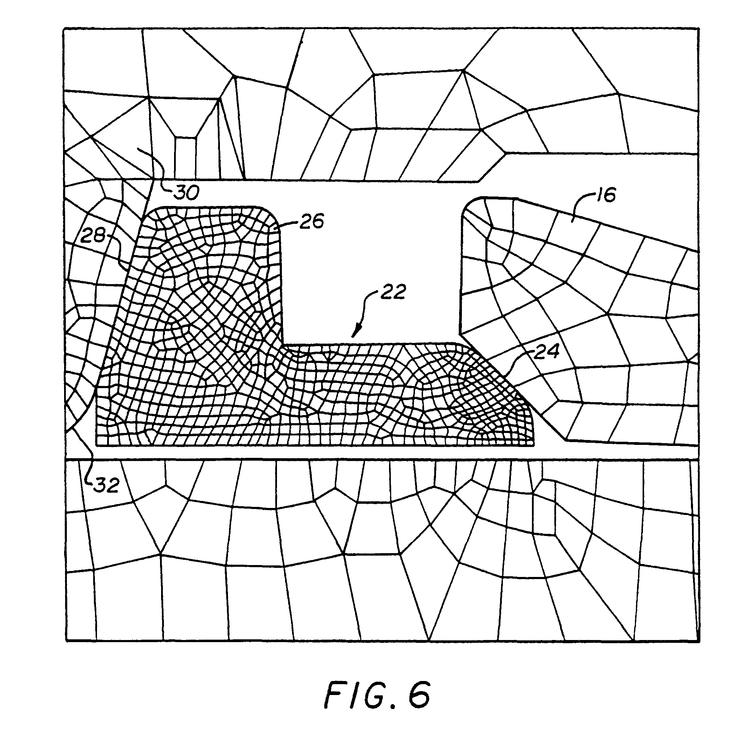

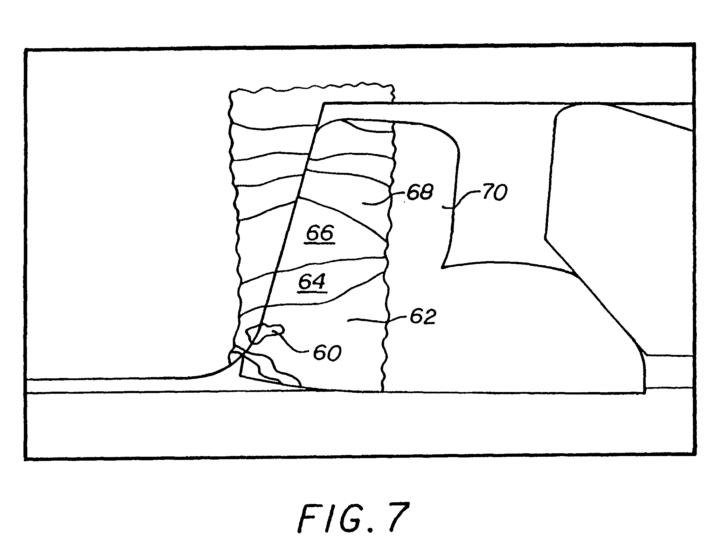

Turning to FIGS. 6 and 7, the rear ferrule of the prior art arrangement of FIG. 1 is shown before and after make-up of the fitting. The fitting was subjected to a finite element analysis, the results of which are particularly evident in FIG. 7. There, shaded regions in the rear flange of the rear ferrule and the nut evidence the force and stress concentrations encountered upon make-up of the fitting. Particularly, a region of high stress concentration is designated at area **60.** Regions of progressively decreased stress concentration are identified by numerals **62, 64, 66, 68,** and **70.** Thus, the large stress concentration at the radial inner location of the rear face **28'** results in increased torque during make-up and potential galling of the nut.

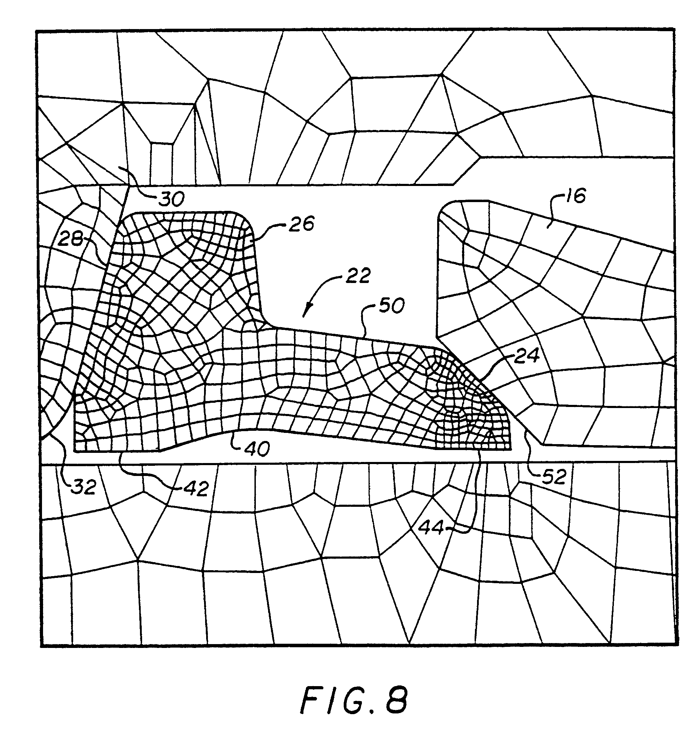

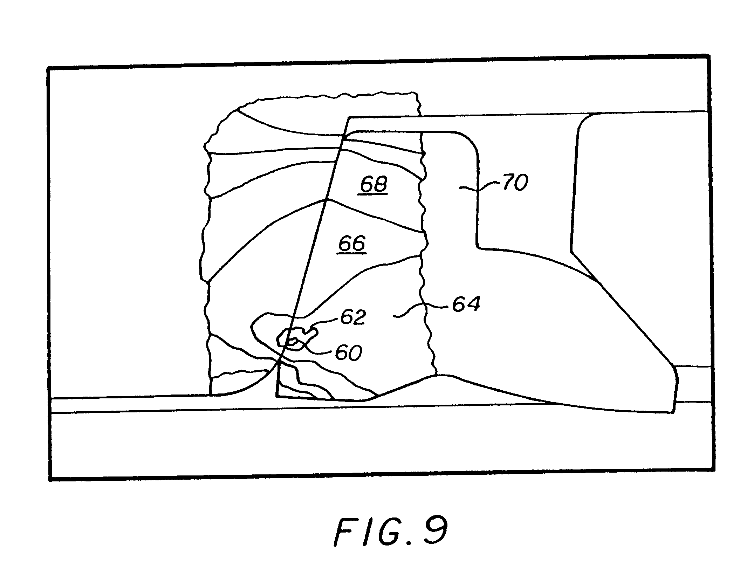

FIGS. 8 and 9 show another modified rear ferrule in accordance with the teachings of the present invention. This rear ferrule is the same as shown in FIG. 5. As particularly evident in FIG. 9, the region of high stress concentration is substantially reduced in size when compared to FIG. 7. This indicates that the forces have been more uniformly dispersed over the rear face of the flange of the rear ferrule. Thus, the torque is reduced and the potential for galling is likewise reduced.

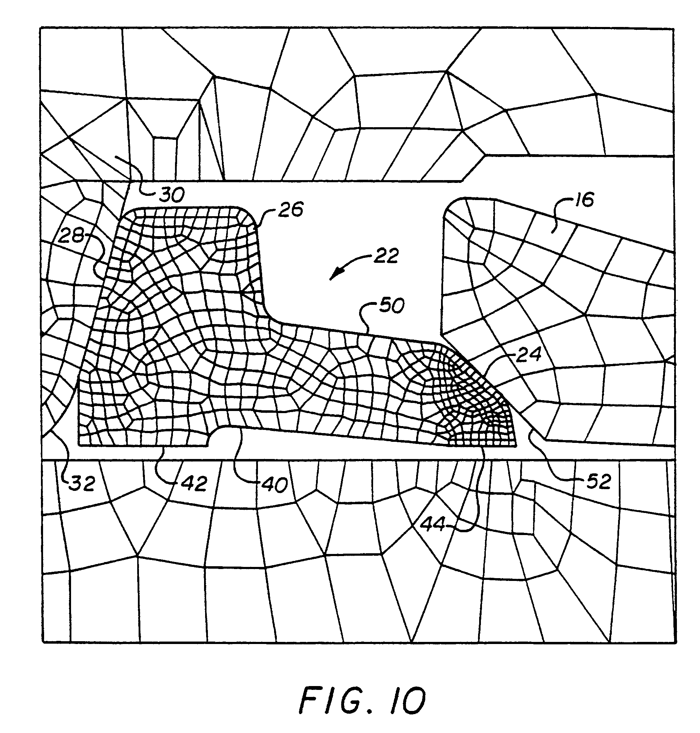

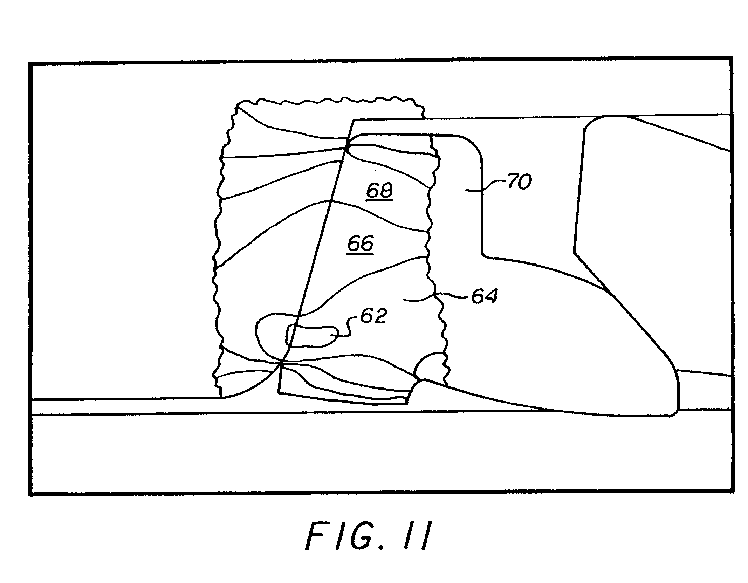

FIGS. 10 and 11 represent the rear ferrule shown and described in FIG. 4. Here, the finite element analysis illustrates that the region of high stress concentration is substantially removed at the rear face and a more uniform distribution of forces obtained. Again, the torque forces associated with make-up are thus reduced with the corresponding reduction in localized force concentrations. The recess and conical outer wall provide a radial component to the forces generated in the fitting and transferred through the rear ferrule while still providing a desired gripping and sealing of the tube.

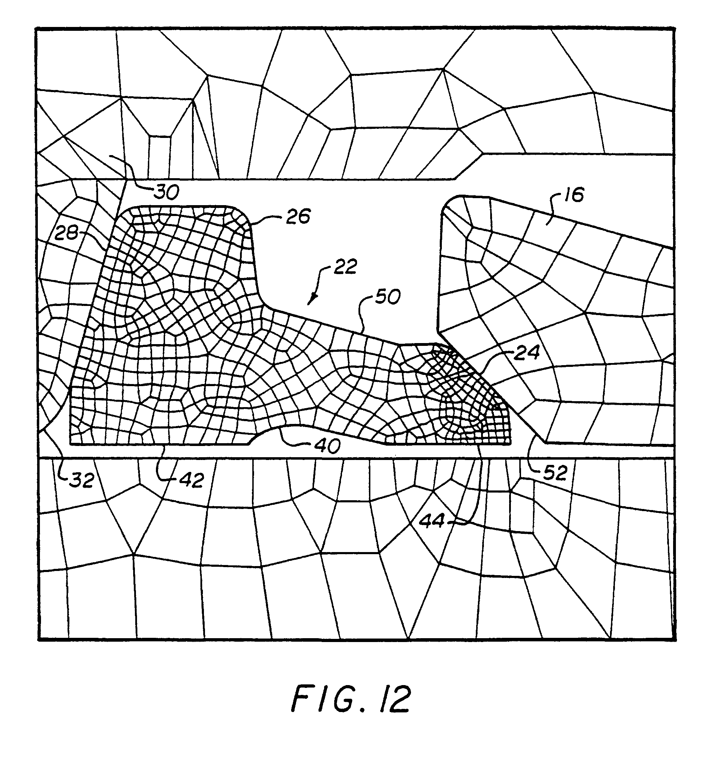

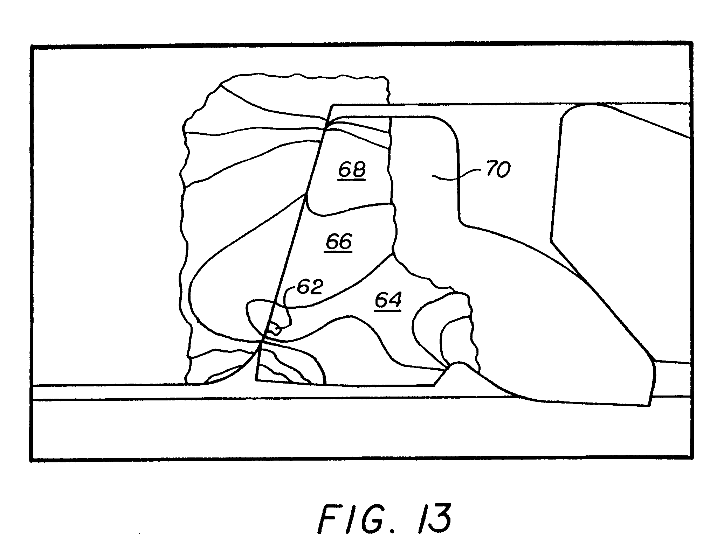

The embodiment of FIGS. 12 and 13 also achieves these same objectives. The recess is of a slightly different configuration, i.e., the recess is more sharply defined in the inner wall of the rear ferrule. It is also shifted slightly forwardly so that the deepest portion of the recess is located forwardly of the rear flange. However, the outer wall is still of conical configuration and in conjunction with the recess distributes the forces along the rear face of the rear ferrule.

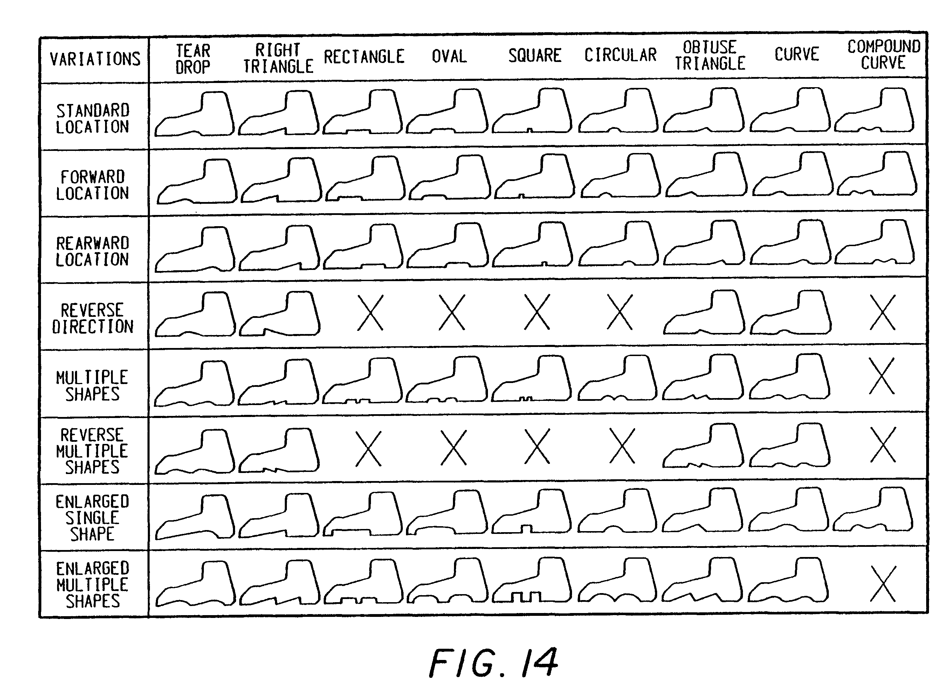

As is apparent with the various embodiments described above, the recess and the tapered outer wall do not require a particular conformation to achieve the force distribution and reduced torque for make-up of the fitting. In fact, a number of proposed alternative embodiments are illustrated in table form in FIG. 14. For example, the first row of geometries have a standard location that is generally defined as the rear edge of the recess being located axially beneath the intersection of the outer wall and the enlarged flange. The tear drop, right triangle, rectangle, oval, square circular, obtuse triangle, curve, and compound curve are various shapes that the recess may adopt. Moreover, the recess can be positioned at a forward location (second row), or a rearward location where the deepest portion of the recess is positioned beneath the enlarged flange (third row) while still adopting the various configurations. Still further, the orientation of the shapes can be reversed as demonstrated by the various geometries in the fourth row or the sixth row, or the recess may be defined by multiple recesses as shown in the geometries of the fifth and eighth rows. Alternatively, the recess(es) may be enlarged as indicated in the seventh and eighth rows. Accordingly, the invention is not limited to the particular configurations shown and described in the earlier embodiments of FIGS. 2-13, but may also be incorporated into selected other geometrical configurations.

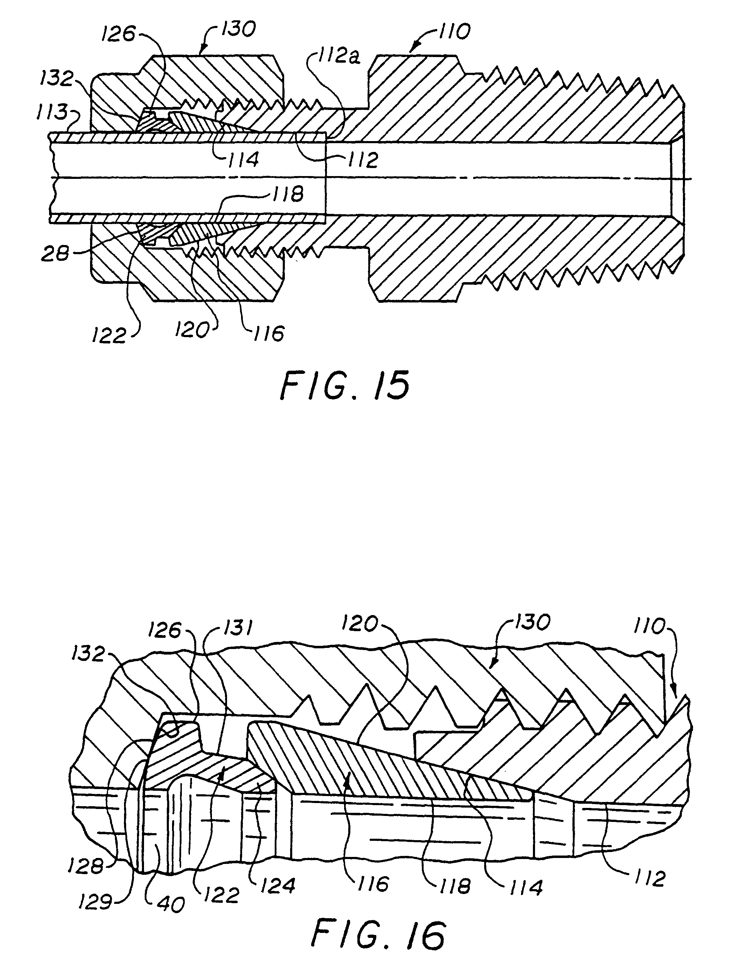

With reference to FIGS. 15-20, another embodiment of the invention is illustrated. As noted herein above, the use of a recess 40 in the rear ferrule 22 significantly reduces force concentrations at the drive surface 32 of the drive nut 30 by adding a radial component to the pull up forces. The provision of the tapered outer wall 50 further can contribute to the radial component and force distribution, as well as controlled deformation of the rear ferrule 22 during pull up. In accordance with the embodiments of FIGS. 15-20, the rear ferrule is provided with a contoured drive surface that further reduces force concentrations in the area of engagement between the drive nut 30 and the rear ferrule 22.

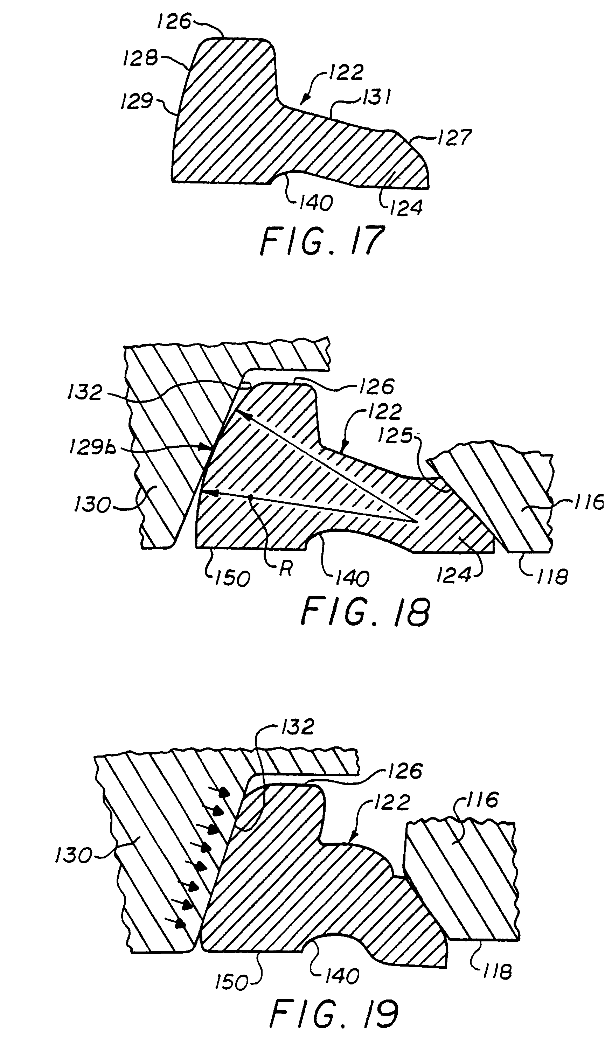

FIG. 21 illustrates in an exemplary manner typical pull up force distributions at the dive nut drive surface 32 and the rear ferrule drive surface 28, typical in cases that incorporate a recess 40 type structure in the rear ferrule as described herein before. These force concentrations are represented by the arrows 200. By comparing the force distributions of FIG. 21 and the force concentrations in FIG. 7 (FIG. 7 being illustrative of a rear ferrule that does not include a recess-type structure) it is evident that the provision of the recess configuration significantly and substantially reduces force concentration on the drive nut drive surface 32. This reduction in force concentrations is further evident from a comparison of FIG. 7 with FIGS. 9. 11 and 13. However, as further illustrated in FIG. 21. in some cases there still may be localized force concentrations, particularly on the radial inner and outer portions of the rear ferrule flange 26. These somewhat higher bi-modal force concentrations are represented by the heavier arrows. The present invention is thus directed to further reducing such force concentrations, with the results illustrated in FIG. 19, wherein the force arrows signify a substantial elimination of pull up force concentrations using a modified rear ferrule drive surface and the recessed inner radius.

In accordance with this further aspect of the invention a two ferrule fitting is shown having a rear ferrule which is modified so as to reduce further the pull up force concentrations by substantially distributing the force concentration along the rear surface that engages the drive surface 32 of the drive nut 30. As is shown in FIGS. 15-18, corresponding fitting components are shown in finger-tight position preparatory to final tightening.

With specific reference to FIGS. 15 and 16, the fitting comprises a body 110 having a cylindrical opening 112 for receiving a tube end 113 that bottoms on a counterbore 112a. A tapered, frusto-conical cam mouth 114 is located at the axial rear or receiving end of the opening 112. A front ferrule 116 having a smooth, cylindrical, radially inner wall 118 is closely received on the tube 113. The front ferrule 116 has a tapered outer surface 120 which engages the tapered mouth 114 of the body 110.

Associated with the front ferrule 116 and located axially adjacent (i.e., in a rearward direction concentrically aligned with the longitudinal axis of the fitting) is a rear ferrule 122 configured with a tapered nose portion 124 having a rearward, tapered surface 127. The rear ferrule 122 also includes a radially extending rear flange 126 having a contoured end face 128. The contoured face 128 includes a rearward-facing driven surface 129 which is engaged by a respective driving surface 132 of the drive nut 130.

The tapered nose surface 127 of the rear ferrule 122 engages and may have, but not necessarily, substantially the same angle as a tapered cam surface 125 in the rear area of the front ferrule 116. The nose portion 124 is joined with the flange 126 by a preferably tapered outer wall 131. In the illustrated embodiment the wall 131 tapers with an increasing radial dimension in the axially rearward direction. The outer wall 131 could also be cylindrical, although it is preferred to be tapered to further facilitate reduction of force concentrations on the rear surface 129.

The ferrules 116 and 122 are enclosed by a threaded drive nut member 130 which includes a drive surface 132 that engages the contoured face 129 of the rear ferrule 122. The nut member 130 threadably engages a threaded portion of the body 110. During tightening and make-up of the fitting, the drive surface 132 of the nut 130 applies pull up forces against the contoured face 129 of the rear ferrule 122 to drive both ferrules axially forward (to the right as viewed in FIG. 16) into the fully engaged position shown in FIG. 19. The rear ferrule is configured so that upon forced engagement with the tapered cam surface 125, the nose portion 124 deforms radially inward. This action is desirable since it results in a tight gripping engagement of the rear ferrule 122 inner cylindrical wall with the outer surface of the wall of the tubing 113.

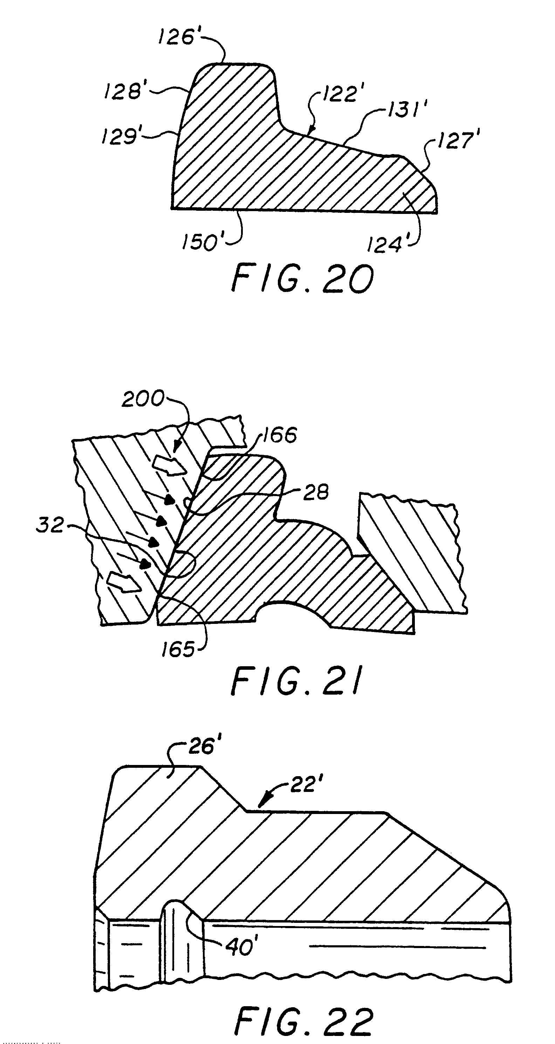

In the embodiments illustrated in FIGS. 15-20, the contoured face 128 of the rear ferrule 122 is rounded, curved, arcuate, or bowed, and preferably has a portion of which is a contour in the form of a convex radius R. The center of the radius can be, for example, internal to the ferrule body as shown in FIG. 18. However, those skilled in the art will readily appreciate that the origin of the radius surface 129 can be located anywhere with respect to the rear ferrule structure with the illustration of FIG. 18 being provided for illustrative purposes only. One aspect of the contoured face 128 is that with the driven surface 129 in the form of a convex radius, a line contact 129b (or reduced face to face radial contact) is formed initially with the nut drive surface 132. in a region between the inner and outer radial portions of the flange 126. The rear ferrule also preferably includes a recess 140 which can be of any configuration as previously described herein above. Alternatively, the contoured rear face 128 can be used with a rear ferrule configuration that omits the recess 140, as illustrated in FIG. 20.

A distinct advantage of the contoured rear ferrule 122 is that pull up forces between the nut drive surface 132 and the contoured face 128 of the rear ferrule 122 are more uniformly distributed across the surface 128 of the rear ferrule, thus reducing and substantially eliminating force concentrations. This further reduction of force concentrations on the drive nut 130 reduces pull up torque and reduces galling, thus facilitating re-make of the fitting.

It is important to note that although the illustrated embodiments show an initial contact between the rear ferrule 122 and the drive nut 130 as generally in the middle of the contoured face 128, this is not required in every application. The initial point of contact will be a function of the overall fitting design, including the geometry of the tapered wall 131, the recess 140, the nose portion 127, the front ferrule 116 configuration and so forth. But in keeping with a general aspect of the invention, the contoured face 128 will be convex or axially variant in the region between the radial inner and outer portions of the flange 126 so as to distribute more uniformly the pull up forces acting on the drive nut 132 to reduce galling and pull up torque as compared to a conventional rear ferrule design that has a substantially flat non-contoured driven surface 128.

FIG. 20 illustrates an embodiment of the invention in which the rear ferrule 122' has a substantially cylindrical inner wall 150', but otherwise includes the flange 126' having a contoured driven surface 128' and a nose portion 124' with a front bevel 127 and a tapered outer wall 131'.

Fig. 22 illustrates another embodiment of the invention wherein the rear ferrule 22' design for larger tubes such as 12,7 mm (½") for example, can have the recess 40' shifted axially rearward, generally within the axial dimension of the flange 26'.

## Claims

1. A tube fitting of the type including a fitting body (10) having a cylindrical bore (12) closely receiving a tube end (13), a tapered counterbore (14) surrounding the tube end and defining the entrance to the bore, a threaded drive member (30) threaded to the fitting body and cooperating with the fitting body to define a chamber enclosing the tube end, and a ferrule (22) having a rear wall (28) engaged by an axial inner end wall of the nut member and a tapered nose with a forward end extending into said tapered counterbore, **characterised in that** the ferrule (22') has a substantially continuous cylindrical interior wall (42,44, 150) that closely surrounds the tube end with the cylindrical interior wall having a circumferentially continuous radial recess (40, 140, 40') located between the ferrule's forward end and rear wall and axially spaced from said ferrule forward end to cause reaction forces generated during fitting make-up and passing through the ferrule to the threaded drive member to have a significant force component that is directed radially outward to thereby reduce a force component acting axially against the radial inner portion of the inner end wall of the nut member; the tube fitting being such that the ferrule comprises a rear ferrule, the tube fitting including a front ferrule (16) surrounding the tube end with a tapered nose extending into the tapered counterbore (14) and a rear wall located axially outward, the tapered nose of the rear ferrule extending into a tapered recess formed in the rear wall of the front ferrule, such that said reaction forces pass from the front ferrule through the rear ferrule to the threaded drive member.

2. The fitting as defined in Claim 1 wherein the recess (40, 140, 40') is disposed at substantially the same axial location as the flange.

3. The fitting as defined in Claim 1, wherein the recess (40, 140, 40') is defined by first and second axially spaced recesses.

4. The fitting as defined in Claim 1 wherein the recess is located radially inward of the tapering outer wall.

5. The fitting as defined in Claim 1 wherein the radial recess (40, 140, 40') increases in radial depth as one progresses axially from adjacent the nose of the rear ferrule toward the rear wall of the rear ferrule.

6. The fitting as defined in Claim 5 wherein the rear wall (28') of the rear ferrule is slightly inclined toward the nose of the rear ferrule.

7. The fitting as defined in Claim 5 wherein the rear ferrule (22', 122) includes a radially extending flange (26', 126) that defines the rear wall of the rear ferrule.

8. The fitting as defined in Claim 7 wherein the radially extending flange has a forward face located rearwardly of the nose portion of the rear ferrule and spaced from the rear wall of the front ferrule when the nose of the rear ferrule if fully inserted into the tapered recess formed in the rear wall of the front ferrule.

9. The fitting as defined in Claim 1 wherein the rear ferrule has a tapering outer wall (131, 50, 131') between the nose portion and the rear wall for directing forces radially outward.

10. The fitting as defined in Claim 1 wherein said circumferentially continuous radial recess has an axial length of approximately five percent minimum of the total axial length of the rear ferrule.

11. The fitting as defined in Claim 1 wherein said circumferentially continuous radial recess (40, 140, 40') in said rear ferrule includes first and second axially spaced recesses.

12. The fitting as defined in Claim 1 wherein the rear ferrule includes a radially extending flange that defines the rear wall of the rear ferrule, the recess being located at substantially the same axial position as the flange.

13. The fitting as defined in Claim 1 wherein the rear ferrule includes a radially extending flange that defines the rear wall of the rear ferrule, and tapering outer wall between the nose portion and the flange for directing forces radially outward.

14. The fitting as defined in Claim 4 wherein the tapering outer wall increases in the radial direction as it extends from the nose portion toward the flange.

15. A fitting as claimed in Claim 1, in which the rear ferrule (122) has not only a circumferential recess (140) in said interior wall but also a flange (126) at a rear end of the ferrule axially opposition said forward end, said flange having an outer radially extending surface (128, 129) that is contoured.

16. The fitting of Claim 15 wherein said circumferential recess (140) has an increasing radial depth in the axial direction toward said second ferrule second end.

17. The fitting of Claim 15 wherein said contoured face (128) is a convex surface.

18. The fitting of Claim 17 wherein said convex surface has a maximum axial extent between radial inner and outer ends of said second ferrule second end.

19. A tube fitting as claimed in Claim 1, in which said rear ferrule (122, 122') has a contoured face (128, 128') on the rear end thereof that engages said threaded drive member (132); said contoured face (128, 128') reducing force concentrations on said threaded drive member when the fitting is pulled up.

20. The fitting of Claim 19 wherein said drive member (30) axially drives said rear ferrule (22) into said front ferrule (16) tapered recess and axially drives said first ferrule into said body tapered mouth when said drive member is pulled up with said body.

21. The fitting of Claim 19 wherein said rear ferrule (22) circumferential recess (40, 140, 140') has an increasing radial depth in the axial direction toward said rear ferrule rear end.

22. The fitting of Claim 19 wherein said rear ferrule (22) comprising a radially extending flange (126, 126') that defines said contoured face (128, 128') and defines a forward face that is spaced from said rear ferrule front end; said rear ferrule having a tapering outer wall 50, 131, 131') between its front and rear ends for adding a radial component to pull up forces occurring at said drive member drive surfaces.

23. The fitting of Claim 19 wherein said contoured face (128, 128') is a convex surface (129).

24. The fitting of Claim 23 wherein said convex surface (129) has a maximum axial extent between radial inner and outer ends of said second ferrule second end.

25. The fitting of claim 24 wherein said convex surface (129) forms a line contact (1296) with said drive surface upon initial engagement therewith during pull up of the fitting.

26. The fitting of claim 24 wherein said contoured face (128) and said circumferential recess (40, 140, 40') produce a radial component in pull up forces occurring at said drive surface to substantially reduce concentrated axial forces at said drive surface.

27. The fitting of Claim 24 wherein said contoured face (128) and said circumferential recess (40, 140, 40') produce a radial component in pull up forces occurring at said drive surface to distribute more uniformly said pull up forces across an interface area between said drive surface and said contoured face as compared to force concentration areas present in absence of said contoured face and said circumferential recess.

28. The fitting of claim 19 wherein said circumferential recess is continuous.

29. The fitting of Claim 19 comprising a plurality of circumferential recesses.

## Patentansprüche

1. Rohrverbindungsstück des Typs, der einen Verbindungsstückkörper (10) mit einer zylindrischen Bohrung (12), die ein Rohrende (13) enganliegend aufnimmt, eine konische Senkbohrung (14), die das Rohrende umgibt und den Eingang zu der Bohrung bildet, ein mit Gewinde versehenes Drückelement (30), das auf den Verbindungsstückkörper aufgeschraubt ist und mit dem Verbindungsstückkörper zusammenwirkt, um eine Kammer zu bilden, die das Rohrende umschließt, sowie eine Quetschhülse (22) enthält, die eine hintere Wand (28), mit der eine axiale innere Abschlusswand des Mutternelementes in Eingriff kommt, sowie eine konische Nase mit einem vorderen Ende aufweist, das sich in die konische Senkbohrung hinein erstreckt, **dadurch gekennzeichnet, dass** die Quetschhülse (22') eine im Wesentlichen durchgehende zylindrische Innenwand (42, 44, 150) aufweist, die das Rohrende enganliegend umgibt, wobei die zylindrische Innenwand eine in Umfangsrichtung durchgehende radiale Aussparung (40,140, 40') aufweist, die sich zwischen dem vorderen Ende der Quetschhülse und der hinteren Wand befindet und von dem vorderen Ende der Quetschhülse axial beabstandet ist und bewirkt, dass Rückwirkungskräfte, die bei der Herstellung der Passung und beim Hindurchtreten durch die Quetschhülse auf das mit Gewinde versehene Drückelement erzeugt werden, eine nennenswerte Kraftkomponente haben, die radial nach außen gerichtet ist, um so eine Kraftkomponente zu verringern, die axial auf den radialen Innenabschnitt der inneren Abschlusswand des Mutternelementes wirkt, wobei das Rohrverbindungsstück so ist, dass die Quetschhülse eine hintere Quetschhülse umfasst, dass das Rohrverbindungsstück eine vordere Quetschhülse (16), die das Rohrende mit einer konischen Nase umgibt, die sich in die konische Senkbohrung (14) hinein erstreckt, und eine hintere Wand enthält, die sich axial außen befindet, wobei sich die konische Nase der hinteren Quetschhülse in die konische Aussparung hinein erstreckt, die in der hinteren Wand der vorderen Quetschhülse ausgebildet ist, so dass die Rückwirkungskräfte von der vorderen Quetschhülse über die hintere Quetschhülse zu dem mit Gewinde versehenen Drückelement gelangen.

2. Verbindungsstück nach Anspruch 1, wobei die Aussparung (40, 140, 40') im wesentlichen an der gleichen axialen Position angeordnet ist wie der Flansch.

3. Verbindungsstück nach Anspruch 1, wobei die Aussparung (40, 140, 40') durch eine erste und eine zweite axial beabstandete Aussparung gebildet wird.

4. Verbindungsstück nach Anspruch 1, wobei sich die Aussparung radial innerhalb der konischen äußeren Wand befindet.

5. Verbindungsstück nach Anspruch 1, wobei die radiale Tiefe der radialen Aussparung (40, 140, 40') von nahe der Nase der hinteren Quetschhülse zur hinteren Wand der hinteren Quetschhülse hin zunimmt.

6. Verbindungsstück nach Anspruch 5, wobei die hintere Wand der hinteren Quetschhülse leicht zur Nase der hinteren Quetschhülse hin geneigt ist.

7. Verbindungsstück nach Anspruch 5, wobei die hintere Quetschhülse (22', 122) einen sich radial erstreckenden Flansch (26', 125) enthält, der die hintere Wand der hinteren Quetschhülse bildet.

8. Verbindungsstück nach Anspruch 7, wobei der sich radial erstreckende Flansch eine vordere Fläche hat, die sich hinter dem Nasenabschnitt der hinteren Quetschhülse befindet und von der hinteren Wand der vorderen Quetschhülse beabstandet ist, wenn die Nase der hinteren Quetschhülse vollständig in die konische Aussparung eingeführt ist, die in der hinteren Wand der vorderen Quetschhülse ausgebildet ist.

9. Verbindungsstück nach Anspruch 1, wobei die hintere Quetschhülse eine konische äußere Wand (131, 50, 131') zwischen dem Nasenabschnitt und der hinteren Wand aufweist, um Kräfte radial nach außen zu leiten.

10. Verbindungsstück nach Anspruch 1, wobei die in Umfangsrichtung durchgehende Aussparung eine axiale Länge von ungefähr minimal fünf Prozent der gesamten axialen Länge der hinteren Quetschhülse hat.

11. Verbindungsstück nach Anspruch 1, wobei die in Umfangsrichtung durchgehende radiale Aussparung (40, 140, 40') in der hinteren Quetschhülse eine erste und eine zweite axial beabstandete Aussparung enthält.

12. Verbindungsstück nach Anspruch 1, wobei die hintere Quetschhülse einen sich radial erstreckenden Flansch enthält, der die hintere Wand der hinteren Quetschhülse bildet, und sich die Aussparung an im Wesentlichen der gleichen axialen Position wie der Flansch befindet.

13. Verbindungsstück nach Anspruch 1, wobei die hintere Quetschhülse einen sich radial erstreckenden Flansch, der die hintere Wand der hinteren Quetschhülse bildet, sowie eine konische äußere Wand zwischen dem Nasenabschnitt und dem Flansch enthält, die die Kräfte radial nach außen leitet.

14. Verbindungsstück nach Anspruch 4, wobei die konische äußere Wand von dem Nasenabschnitt auf den Flansch zu in der radialen Richtung zunimmt.

15. Verbindungsstück nach Anspruch 1, wobei die hintere Quetschhülse (122) nicht nur eine Umfangsaussparung (140) in der Innenwand aufweist, sondern auch einen Flansch (126) an einem hinteren Ende der Quetschhülse axial dem vorderen Ende gegenüberliegend, und der Flansch eine äußere, sich radial erstreckende Fläche (128, 129) hat, die konturiert ist.

16. Verbindungsstück nach Anspruch 15, wobei die Umfangsaussparung (140) in der axialen Richtung auf das zweite Ende der Quetschhülse zu eine zunehmende radiale Tiefe hat.

17. Verbindungsstück nach Anspruch 15, wobei die konturierte Fläche (128) eine konvexe Fläche ist.

18. Verbindungsstück nach Anspruch 17, wobei die konvexe Fläche eine maximale axiale Ausdehnung zwischen einem radialen inneren und einem radialen äußeren Ende des zweiten Endes der zweiten Quetschhülse hat.

19. Rohrverbindungsstück nach Anspruch 1, wobei die hintere Quetschhülse (122, 122') eine konturierte Fläche (128, 128') an ihrem hinteren Ende hat, das mit dem mit Gewinde versehenen Drückelement (132) in Eingriff kommt, und die konturierte Fläche (128, 128') Kraftkonzentrationen an dem mit Gewinde versehenen Drückelement reduziert, wenn das Verbindungsstück angezogen wird.

20. Verbindungsstück nach Anspruch 19, wobei das Drückelement die hintere Quetschhülse (22) axial in die konische Aussparung der vorderen Quetschhülse (16) drückt und die erste Quetschhülse axial in die konische Öffnung des Körpers drückt, wenn das Drückelement mit dem Körper angezogen wird.

21. Verbindungsstück nach Anspruch 19, wobei die radiale Tiefe der Umfangsaussparung (40, 140, 140') der Quetschhülse (22) in der axialen Richtung auf das hintere Ende der hinteren Ende der Quetschhülse zu zunimmt.

22. Verbindungsstück nach Anspruch 19, wobei die hintere Quetschhülse (22) einen sich radial erstreckenden Flansch (126, 126') umfasst, der die konturierte Fläche (128, 128') bildet und eine vordere Fläche bildet, die von dem vorderen Ende der hinteren Quetschhülse beabstandet ist, und die hintere Quetschhülse eine konische Außenwand (50, 131, 131') zwischen ihrem vorderen und ihrem hinteren Ende hat, die eine radiale Komponente zu Anziehkräften hinzufügt, die an den Drückflächen des Drückelementes auftreten.

23. Verbindungsstück nach Anspruch 19, wobei die konturierte Fläche (128, 128') eine konvexe Fläche (129) ist.

24. Verbindungsstück nach Anspruch 23, wobei die konvexe Fläche (129) eine maximale axiale Ausdehnung zwischen dem radialen inneren und dem radialen äußeren Ende des zweiten Endes der zweiten Quetschhülse hat.

25. Quetschhülse nach Anspruch 24, wobei die konvexe Fläche (129) einen Linienkontakt (1296) mit der Drückfläche beim anfänglichen Eingriff mit ihr beim Anziehen des Verbindungsstücks bildet.

26. Verbindungsstück nach Anspruch 24, wobei die konturierte Fläche (128) und die Umfangsaussparung (40, 140, 40') eine radiale Komponente in Anziehkräften erzeugen, die an der Drückfläche auftreten, um konzentrierte axiale Kräfte an der Drückfläche wesentlich zu verringern.

27. Verbindungsstück nach Anspruch 24, wobei die konturierte Fläche (128) und die Umfangsaussparung (40, 140, 40') eine radiale Komponente in Anziehkräften erzeugen, die an der Drückfläche auftreten, um die Anziehkräfte gleichmäßiger über die Grenzfläche zwischen der Drückfläche und der konturierten Fläche als in Kraftkonzentrationsbereichen ohne die konturierte Fläche und die Umfangsaussparung zu verteilen.

28. Verbindungsstück nach Anspruch 19, wobei die Umfangsaussparung durchgehend ist.

29. Verbindungsstück nach Anspruch 19, das eine Vielzahl von Umfangsaussparungen umfasst.

## Revendications

1. Raccord pour tube du type comprenant un corps de raccord (10) comportant un alésage cylindrique (12) qui reçoit étroitement une extrémité de tube (13), un contre-alésage conique (14) qui entoure l'extrémité de tube et qui définit l'entrée de l'alésage, un élément d'entraînement fileté (30) vissé sur le corps de raccord et coopérant avec celui-ci pour définir une chambre renfermant l'extrémité de tube, et une bague (22) comportant une paroi arrière (28) en prise avec une paroi d'extrémité intérieure axiale de l'élément formant écrou et un nez conique pourvu d'une extrémité avant qui s'étend dans ledit contre-alésage conique, **caractérisé en ce que** la bague (22') possède une paroi intérieure cylindrique sensiblement continue (42, 44, 150) qui entoure étroitement l'extrémité de tube, la paroi intérieure cylindrique comportant un renfoncement radial continu circonférentiellement (40, 140, 40') situé entre l'extrémité avant et la paroi arrière de la bague et espacé axialement de l'extrémité avant de ladite bague pour faire en sorte que des forces de réaction générées au cours de l'assemblage du raccord et qui se transmettent à l'élément d'entraînement fileté par l'intermédiaire de la bague aient une composante de force importante qui soit dirigée radialement vers l'extérieur, pour ainsi réduire une composante de force agissant axialement contre la partie intérieure radiale de la paroi d'extrémité intérieure de l'élément formant écrou; le raccord pour tube étant tel que la bague comprend une bague arrière, le raccord pour tube comprenant une bague avant (16) entourant l'extrémité de tube et munie d'un nez conique qui s'étend dans le contre-alésage conique (14) et d'une paroi arrière située axialement vers l'extérieur, le nez conique de la bague arrière s'étendant dans un renfoncement conique formé dans la paroi arrière de la bague avant, afin que lesdites forces de réaction se transmettent de la bague avant à l'élément d'entraînement fileté par l'intermédiaire de la bague arrière.

2. Raccord tel que défini dans la revendication 1, dans lequel le renfoncement (40, 140, 40') est disposé sensiblement au niveau de la même position axiale que la collerette.

3. Raccord tel que défini dans la revendication 1, dans lequel le renfoncement (40, 140, 40') est défini par des premier et second renfoncements espacés axialement.

4. Raccord tel que défini dans la revendication 1, dans lequel le renfoncement est situé radialement vers l'intérieur par rapport à la paroi extérieure conique.

5. Raccord tel que défini dans la revendication 1, dans lequel le renfoncement radial (40, 140, 40') a une profondeur radiale qui va en augmentant dans la direction axiale à partir d'une zone adjacente au nez de la bague arrière vers la paroi arrière de cette dernière.

6. Raccord tel que défini dans la revendication 5, dans lequel la paroi arrière (28') de la bague arrière est légèrement inclinée vers le nez de cette dernière.

7. Raccord tel que défini dans la revendication 5, dans lequel la bague arrière (22', 122) comprend une collerette s'étendant radialement (26' 126) qui définit sa paroi arrière.

8. Raccord tel que défini dans la revendication 7, dans lequel la collerette s'étendant radialement possède une face avant qui est située vers l'arrière par rapport à la partie formant nez de la bague arrière et qui est espacée de la paroi arrière de la bague avant, lorsque le nez de la bague arrière est entièrement inséré dans le renfoncement conique formé dans la paroi arrière de la bague avant.

9. Raccord tel que défini dans la revendication 1, dans lequel la bague arrière possède une paroi extérieure conique (131, 50, 131') entre sa partie formant nez et sa paroi arrière pour diriger des forces radialement vers l'extérieur.

10. Raccord tel que défini dans la revendication 1, dans lequel ledit renfoncement radial continu circonférentiellement a une longueur axiale qui représente au moins approximativement cinq pour cent de la longueur axiale totale de la bague arrière.

11. Raccord tel que défini dans la revendication 1, dans lequel ledit renfoncement radial continu circonférentiellement (40, 140, 40') formé dans ladite bague arrière comprend des premier et second renfoncements espacés axialement.

12. Raccord tel que défini dans la revendication 1, dans lequel la bague arrière comprend une collerette s'étendant radialement qui définit sa paroi arrière, le renfoncement étant situé sensiblement au niveau de la même position axiale que la collerette.

13. Raccord tel que défini dans la revendication 1, dans lequel la bague arrière comprend une collerette s'étendant radialement qui définit sa paroi arrière, et une paroi extérieure conique entre sa partie formant nez et sa collerette pour diriger des forces radialement vers l'extérieur.

14. Raccord tel que défini dans la revendication 4, dans lequel la paroi extérieure conique va en augmentant dans la direction radiale de la partie formant nez vers la collerette.

15. Raccord tel que défini dans la revendication 1, dans lequel la bague arrière (122) comporte non seulement un renfoncement circonférentiel (140) dans sa paroi intérieure, mais également une collerette (126) au niveau de son extrémité arrière opposée axialement à son extrémité avant, ladite collerette présentant une surface (128, 129) s'étendant radialement vers l'extérieur qui est profilée.

16. Raccord selon la revendication 15, dans lequel ledit renfoncement circonférentiel (140) a une profondeur radiale croissante dans la direction axiale orientée vers la seconde extrémité de ladite seconde bague.

17. Raccord selon la revendication 15, dans lequel ladite face profilée (128) est une surface convexe.

18. Raccord selon la revendication 17, dans lequel ladite surface convexe a une étendue axiale maximale entre les extrémités radiales intérieure et extérieure de la seconde extrémité de ladite seconde bague.

19. Raccord tel que défini dans la revendication 1, dans lequel ladite bague arrière (122, 122') possède une face profilée (128, 128') sur son extrémité arrière qui vient en prise avec ledit élément d'entraînement fileté (132); ladite face profilée (128, 128') réduisant des concentrations de forces sur ledit élément d'entraînement fileté lorsque le raccord est serré par traction.

20. Raccord selon la revendication 19, dans lequel, lorsqu'il est serré par traction avec ledit corps, ledit élément d'entraînement (30) entraîne axialement ladite bague arrière (22) dans le renfoncement conique de ladite bague avant (16) et ladite première bague dans l'ouverture conique dudit corps.

21. Raccord selon la revendication 19, dans lequel le renfoncement circonférentiel (40, 140, 140') de ladite bague arrière (22) a une profondeur radiale croissante dans la direction axiale orientée vers l'extrémité arrière de celle-ci.

22. Raccord selon la revendication 19, dans lequel ladite bague arrière (22) comprend une collerette s'étendant radialement (126, 126') qui définit ladite face profilée (128, 128') ainsi qu'une face avant qui est espacée de son extrémité avant; ladite bague arrière possédant une paroi extérieure conique (50, 131, 131') entre ses extrémités avant et arrière pour ajouter une composante radiale à des forces de serrage par traction créées au niveau des surfaces d'entraînement dudit élément d'entraînement.

23. Raccord selon la revendication 19, dans lequel ladite face profilée (128, 128') est une surface convexe (129).

24. Raccord selon la revendication 23, dans lequel ladite surface convexe (129) a une étendue axiale maximale entre les extrémités radiales intérieure et extérieure de la seconde extrémité de ladite seconde bague.

25. Raccord selon la revendication 24, dans lequel ladite surface convexe (129) forme un contact linéaire (129b) avec ladite surface d'entraînement lors de son contact initial avec celle-ci au cours du serrage par traction dudit du raccord.

26. Raccord selon la revendication 24, dans lequel ladite face profilée (128) et ledit renfoncement circonférentiel (40, 140, 40') produisent une composante radiale de forces de serrage par traction créées au niveau de ladite surface d'entraînement pour réduire sensiblement des forces axiales concentrées au niveau de ladite surface d'entraînement.

27. Raccord selon la revendication 24, dans lequel ladite face profilée (128) et ledit renfoncement circonférentiel (40, 140, 40') produisent une composante radiale de forces de serrage par traction créées au niveau de ladite surface d'entraînement pour répartir de manière plus uniforme lesdites forces de serrage par traction sur toute l'étendue d'une zone d'interface entre ladite surface d'entraînement et ladite face profilée comparativement aux zones de concentration de forces qui existent en l'absence de ladite face profilée et dudit renfoncement circonférentiel.

28. Raccord selon la revendication 19, dans lequel ledit renfoncement circonférentiel est continu.

29. Raccord selon la revendication 19, comprenant plusieurs renfoncements circonférentiels.
